# FASCICULE DE BREVET EUROPEEN

(11) **EP 0 778 220 B1**
(45) Date de publication et mention de la délivrance du brevet: **29.04.1998**
(21) Numéro de dépôt: 96402422.8
(22) Date de dépôt: 13.11.1996
(51) Int. Cl.: B65D 47/20, B65D 51/16

(54) **Tête de distribution équipée d'un système de fermeture à reprise d'air**
Ausgabekopf mit Verschlusssystem mit Luftansauger
Disperging head having a closing system with air suction

(30) Priorité: 08.12.1995 FR 9514578
(43) Date de publication de la demande: 11.06.1997
(73) Titulaire: L'OREAL, 75008 Paris (FR)
(72) Inventeur: De Nervo, Stanislas, 75017 Paris (FR); Baudin, Gilles, 95330 Domont (FR)
(74) Mandataire: Lhoste, Catherine

(56) Documents cités:
- US-A- 4 314 658

## Description

La présente invention concerne une tête et un ensemble de distribution équipé d'un système de fermeture permettant une reprise d'air.

Plus particulièrement, ainsi qu'il apparaît dans le préambule de la revendication 1, la présente invention concerne une tête de distribution comprenant éventuellement un couvercle mobile et comprenant au moins un canal de distribution d'un produit à distribuer et un système de fermeture pour fermer la partie terminale, s'ouvrant sur l'extérieur, du canal de distribution, ledit système de fermeture étant formé par un obturateur constitué par une lèvre élastique qui fait partie d'une pièce en matériau élastiquement déformable et par au moins un siège, le siège faisant partie d'un élément en matériau rigide, la pièce en matériau déformable étant au moins partiellement solidaire de l'élément en matériau rigide, l'obturateur étant en contact avec son siège associé lorsqu'il n'y a pas de distribution, s'écartant dudit siège par déformation élastique sous la poussée du produit à distribuer, revenant par élasticité lorsque cesse la distribution.

On connait par le document FR-2705650 une tête de distribution de ce type et représentée sur la figure 1, montée sur un récipient manuellement déformable. Cette tête de distribution comprend, outre l'élément rigide (11), la pièce élastique ou obturateur (12) qui repose sur le siège (15) de l'élément rigide (11) et est retenue par le rebord (19). Un jour (14) sépare l'obturateur (12) du rebord (18) du siège. La pièce élastique (12) est obtenue en surmoulant partiellement l'organe d'accrochage (13) en forme de barre en matériau rigide appartenant à l'élément rigide (11), in situ, dans un deuxième temps, après l'opération de moulage proprement dite de l'élément rigide (11). La référence (16) représente le canal de distribution. Toutefois, l'obturateur (12) revenant en position de contact parfaitement étanche avec le siège (15) dès l'arrêt de la distribution, une telle tête de distribution n'autorise pas la reprise d'air ce qui a pour conséquence, par la dépression qui se crée à l'intérieur du récipient, la déformation dudit récipient. Outre la perte de ses qualités esthétiques, cette déformation entraîne une moins bonne facilité de manipulation du récipient. En outre, on constate que le taux de vidange d'un récipient dépourvu de système de reprise d'air est inférieur à celui d'un récipient permettant la reprise d'air.

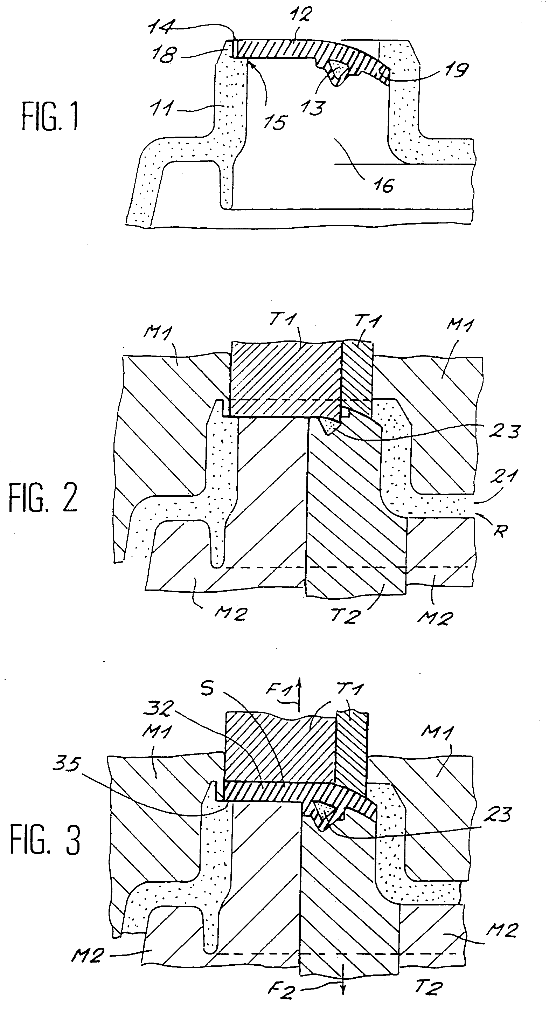

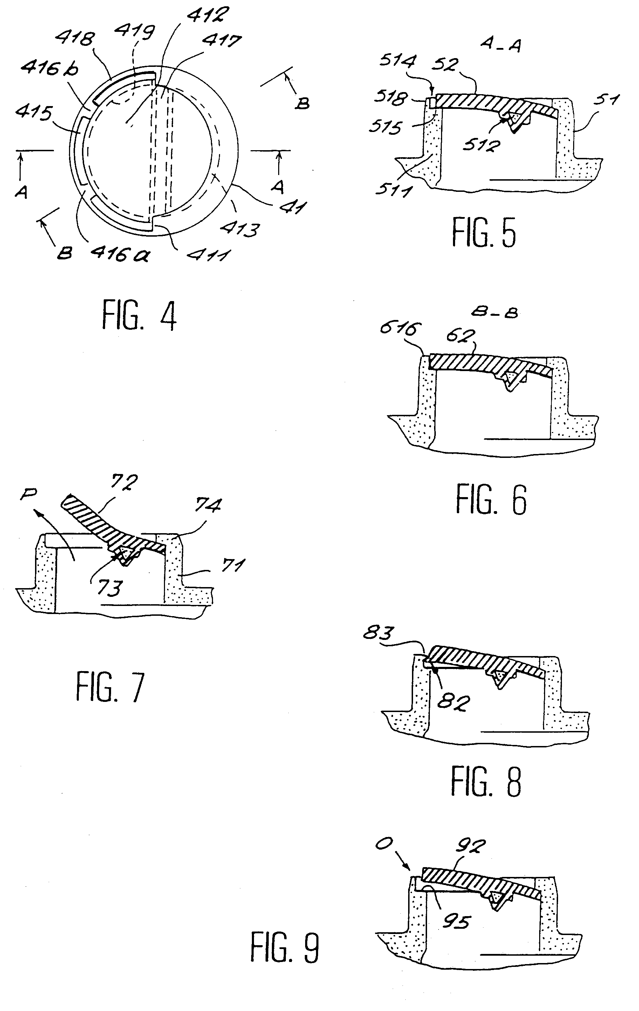

Les figures 2 et 3 montrent schématiquement le moulage de la tête de distribution telle que décrite ci-dessus en une pièce, par surinjection d'un matériau élastique souple S autour de l'organe d'accrochage (23) en matériau rigide R appartenant l'élément en matériau rigide (21). Dans un premier temps, les deux mâchoires M1 et M2, à empreintes, du moule de la machine de moulage comprenant chacune un tiroir T1 et T2 sont fermées et, les tiroirs T1 et T2 étant fermés, le matériau rigide R est injecté dans le moule pour réaliser l'élément rigide (21), par exemple en polypropylène, à une température voisine de 160°C ; dans un deuxième temps, comme montré sur la figure 3, on sépare les tiroirs T1 et T2 dans le sens des flèches F1, F2, d'une distance qui correspond approximativement à l'épaisseur de l'obturateur (32). Puis, à une température de préférence inférieure à 160°C, on injecte le matériau élastique tel que de l'éthylène vinyl acétate pour entourer la barre d'accrochage (23). Ainsi, l'obturateur (32) est solidement ancré dans le canal de distribution, sans qu'il ne se crée de liaison chimique entre l'obturateur (32) et son siège (35).

Cette opération de moulage, qui est d'une grande simplicité, permet de fabriquer en un seul cycle de moulage la tête de distribution, sans avoir recours aux obturateurs en élastomère nécessitant une phase de réticulation, et donc une étape de montage supplémentaire.

Afin de remédier à l'inconvénient ci-dessus décrit, la demanderesse a mis au point un ensemble de distribution qui permet une protection maximale du produit qu'il renferme contre les agressions extérieures : sable, poussière, eau, ou contre les réactions d'oxydation provoquées par les agents chimiques externes, en particulier par l'oxygène de l'air, tout en permettant d'éviter une déformation du récipient en cours d'utilisation.

On connait des documents EP-A-0452196 et US-4,314,658 des têtes de distribution munies d'obturateurs s'ouvrant par déformation élastique et autorisant une reprise d'air. Toutefois ces têtes de distribution sont constituées de plusieurs piéces mécaniques assemblées. Or, le moulage d'une pièce mécanique est une opération coûteuse et on cherche à diminuer le nombre de ces pièces pour diminuer le coût de l'ensemble.

La présente invention a également pour but de réaliser un ensemble tel que décrit ci-dessus dont le prix de revient est inférieur à celui des ensembles connus jusqu'ici et qui, en outre, fonctionne avec une grande fiabilité.

L'invention a pour objet une tête de distribution telle que décrite ci-dessus, caractérisée en ce que le siège est muni d'au moins une butée agencée de sorte que, lorsque cesse la distribution, ladite butée empêche la pièce élastique de recouvrir de façon parfaitement étanche la partie terminale du canal de distribution.

L'invention a également pour objet un ensemble de distribution comprenant une tête selon l'invention.

Comme dans l'état de l'art, la tête de distribution comprend un siège muni ou non d'un rebord: Selon l'art antérieur, en l'absence de rebord sur le siège, l'obturateur peut revenir en arrière à sa position initiale lorsque la distribution est terminée. En présence d'un rebord sur le siège, l'obturateur est placé et dimensionné de telle sorte que sa périphérie est légèrement en retrait par rapport au rebord du siège, ce qui lui permet de revenir en arrière à sa position initiale lorsque la distribution est terminée, sans être retenu par le rebord du siège. Dans les têtes de distribution selon l'invention, les configurations relatives de l'obturateur et d'un éventuel rebord sont identiques à ce qui est connu de l'art antérieur.

Selon l'invention, le siège comprend au moins une butée permettant de bloquer partiellement le retour de l'obturateur en position de contact hermétique avec le siège.

De façon préférentielle, cette butée (ou ces butées) est placée sensiblement à la périphérie de l'obturateur. L'obturateur élastique repose sur cette butée, il se forme donc autour de cette butée des ouvertures où l'air peut passer et remplir l'espace laissé vacant dans le récipient à la fin de la distribution. La butée peut être de forme quelconque. Lorsque le siège est muni d'un rebord, de préférence elle est d'une hauteur inférieure ou égale au rebord du siège. Eventuellement, si le siège est muni d'un rebord, cette butée peut être placée sur ce rebord, à l'intérieur du canal défini par ce rebord. De façon préférentielle l'orientation de la butée est radiale.

Selon un mode préféré de réalisation de l'invention, le siège comprend au moins deux butées, ce qui permet un meilleur maintien de l'obturateur.

Préférentiellement, ces butées sont régulièrement espacées sur le pourtour du siège et/ou du rebord.

De façon préférentielle, la tête de distribution selon l'invention comprend également un couvercle muni d'une pièce rigide qui, lorsque l'on ferme le couvercle, vient appuyer sur l'obturateur et lui fait reprendre sa position initiale de recouvrement étanche de la partie terminale du canal de distribution.

Selon l'invention, la pièce rigide du couvercle est continue ou discontinue, c'est-à-dire sur tout ou partie de la périphérie du couvercle qui est en regard du siège, cette pièce venant appuyer sur l'obturateur et le faire reposer, de façon hermétique, sur le siège. De façon préférentielle, cette pièce est continue afin d'assurer une meilleure étanchéité de la fermeture. Préférentiellement, cette pièce est placée en regard de la ou des butées afin d'exercer une pression sur l'obturateur aux endroits où celui-ci est retenu par une butée. De façon encore plus préférentielle, cette pièce rigide occupe toute la périphérie du couvercle qui est en regard du siège. Ainsi, la pièce rigide assure l'immobilisation étanche de l'obturateur sur le siège. Cette pièce rigide peut avoir une forme quelconque ; elle suit le contour du siège. Lorsque le couvercle est fermé, la pièce rigide peut-être légèrement en retrait ou juste contre la ou les butée(s). Cette pièce peut en outre être d'une hauteur légèrement supérieure à la distance entre le fond du couvercle fermé sur lequel est fixée cette pièce, et la surface de l'obturateur, de sorte qu'elle exerce la pression sur l'obturateur. La surface par laquelle la pièce rigide appuie sur l'obturateur est d'une forme quelconque.

L'élément en matériau rigide dont fait partie le siège peut être de forme quelconque. Avantageusement l'élément rigide est cylindrique, à section circulaire. Dans ce cas, préférentiellement, la pièce rigide du couvercle venant faire pression sur l'obturateur est un fragment de bourrelet annulaire.

De façon préférentielle, le couvercle est muni d'une jupe de guidage et d'étanchéité et l'élément en matériau rigide est muni d'une cheminée définissant le canal de distribution et se terminant par un sytème de fermeture selon l'invention, ladite jupe étant apte à s'encliqueter, en position rabattue du couvercle, autour de la cheminée.

Selon un mode préféré de réalisation de l'invention, afin de rendre la pièce en matériau déformable partiellement solidaire de l'élément en matériau rigide, la première est au moins partiellement surmoulée autour de la seconde, le matériau élastique et le matériau rigide étant chimiquement incompatibles pour éviter des liaisons chimiques entre les deux matériaux lors de l'opération de surmoulage.

De façon préférentielle, l'élément rigide comporte un organe d'accrochage surmoulé, au moins partiellement, par la pièce en matériau déformable.

De façon préférentielle, l'organe d'accrochage est formé par une barre traversant le canal de distribution.

En particulier, l'organe d'accrochage peut être noyé dans la pièce en matériau déformable, ce qui confère plus de tenue à la pièce en matériau déformable.

Avantageusement, la matière formant la pièce en matériau déformable a une dureté comprise dans la gamme allant de 40 Shore A à 50 Shore D et de préférence de 50 Shore A à 90 Shore A.

Ce matériau déformable est choisi, avantageusement, parmi les polyéthylènes de basse densité, l'éthylène vinyl acétate, les polychlorures de vinyle, les terpolymères de bloc de polypropylène avec des motifs styrène/éthylène - butène/styrène, et les polyuréthanes thermoplastiques.

L'élément en matériau rigide, est, de préférence, moulé en un matériau choisi parmi les polyéthylènes de haute densité et les polypropylènes.

Selon l'invention, on peut surinjecter, par exemple, la pièce en matériau déformable en polyéthylène de basse densité sur un siège rigide en polypropylène, ou surinjecter de l'éthylène vinyl acétate sur du polypropylène ou sur du polyéthylène de haute densité. D'autres couples de matériaux élastiques et rigides chimiquement incompatibles sont constitués par les combinaisons : polychlorure de vinyle - polypropylène ou polyéthylène de haute densité ; terpolymère de bloc de polypropylène/styrène éthylène/butène styrène - polypropylène ou polyéthylène de haute densité ou bien polyuréthane thermoplastique - polypropylène ou polyéthylène de haute densité.

Le récipient sur lequel est monté la tête de distribution selon l'invention peut être un récipient de fonctionnement quelconque, mais l'invention concerne plus particulièrement un récipient souple compressible manuellement.

Pour plus d'information, on pourra se reporter au document FR-2705650 dans lequel sont décrits des ensembles de distribution pouvant utiliser le système de fermeture selon l'invention.

Pour mieux faire comprendre l'objet de l'invention, on va en décrire, maintenant, à titre d'exemple purement illustratif et non limitatif, plusieurs modes de réalisation représentés sur les dessins annexés.

Sur ces dessins :
- la figure 1 déjà décrite représente une tête de distribution selon l'art antérieur ;
- les figures 2 et 3 déjà décrites représentent schématiquement les opérations de moulage conduisant à la tête de distribution selon l'art antérieur ;
- les figures 4 à 6 représentent une tête de distribution selon l'invention en position de repos ;
- la figure 7 représente une tête de distribution selon l'invention en fonctionnement ;
- les figures 8 et 9 représentent une tête de distribution selon l'invention en position de reprise d'air ;
- les figures 10 et 11 représentent en coupe longitudinale un ensemble de distribution équipé d'une tête de distribution selon l'invention.
- La figure 12 représente schématiquement les opérations de moulage conduisant à la tête de distribution selon l'invention.

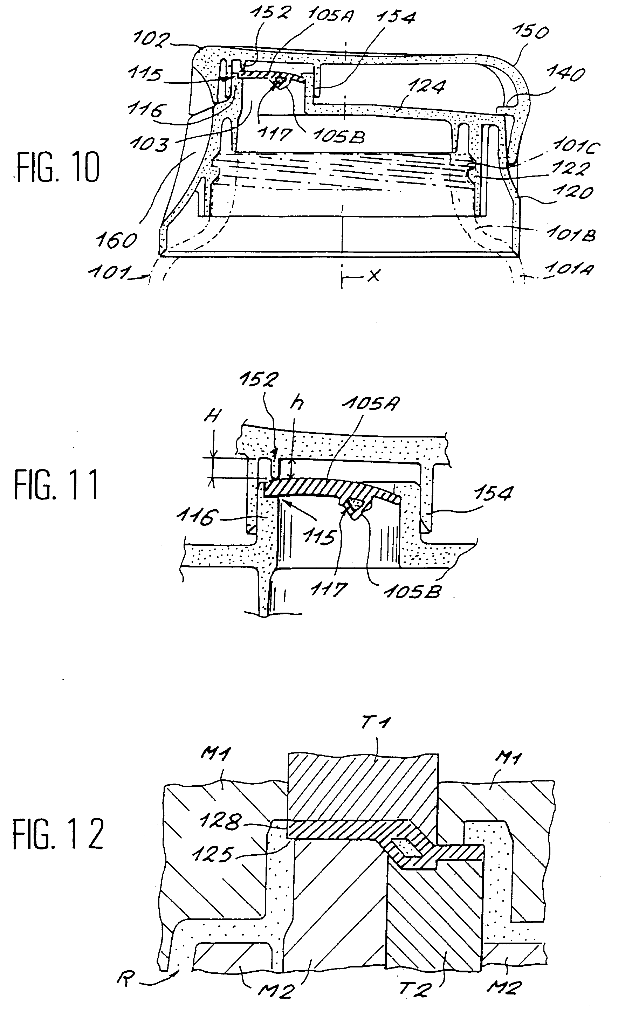

La figure 10 représente un ensemble de distribution (101) équipé d'une tête de distribution (102) selon l'invention dont le couvercle (150) est en position fermée. Cette tête est montée sur un récipient souple (101A) compressible manuellement. Le récipient (101A) comporte un goulot (101B) muni d'un filetage (101C). La tête de distribution (102) comporte un corps (120) de forme générale cylindrique, muni d'un filetage interne (122), apte à coopérer avec le filetage (101C) du récipient. A son extrémité opposée au récipient (101A), le corps (120) est fermé par un plateau circulaire (124), comportant une cheminée cylindrique (116), définissant un canal de distribution (103). Ce canal de distribution est excentré par rapport à l'axe central X de l'ensemble de distribution (101). Le plateau (124) comporte, en outre, du côté opposé au canal (103), une charnière (140), par laquelle le couvercle (150) est raccordé au corps (120). Ce couvercle est pivotant et comporte la jupe d'étanchéité cylindrique (154), apte à s'encliqueter, en position rabattue du couvercle, autour de la cheminée (116). A l'intérieur de cette jupe (154) est formé, de façon concentrique, un fragment de bourrelet annulaire (152).
La cheminée (116) comporte le bord annulaire (115) qui forme un siège rigide pour un obturateur élastique (105A). Cet obturateur (105A) a une forme circulaire et est légèrement bombé vers l'extérieur, dans sa partie centrale. Du côté tourné vers le récipient, l'obturateur comporte une zone (105B) en surépaisseur, dans laquelle est noyée la barre (117) de section trapézoïdale, constituant l'organe d'accrochage de l'obturateur (105A) sur la cheminée (116). L'obturateur (105A) au niveau du bord (115) du canal de distribution (103) forme, de façon étanche, un embout de distribution unidirectionnel (104), apte à s'ouvrir sous la poussée du produit, par exemple lorsque l'utilisateur exerce une pression sur le récipient souple (101A), et à se refermer, lorsque cesse la distribution. En outre la tête de distribution (102) comporte une découpe ergonomique (160) adaptée à la forme d'un doigt et qui permet de faciliter l'ouverture du couvercle.

Après l'utilisation, le couvercle (150) est rabattu pour fermer le canal de distribution. Lors de cette opération, le bourrelet (152) vient se loger sur la périphérie de l'obturateur (105A) en immobilisant celui-ci. Ainsi, la fermeture de la capsule est étanche.

La figure 11 montre de façon plus détaillée l'embout de fermeture décrit sur la figure 10. Les références sont les mêmes que pour la figure 10. On note en particulier que la hauteur H de l'élément rigide venant appuyer sur l'obturateur est plus grande que la distance h du fond du couvercle à l'obturateur.

La figure 4 montre une tête de distribution cylindrique selon l'invention en vue de dessus comprenant l'obturateur élastique (412) et l'élément rigide (41). Cet élément rigide (41) en une seule pièce est constitué de la cheminée (411) définissant le canal de distribution (419), l'extrêmité de cette cheminée (411) étant traversée par l'organe d'accrochage (417) et étant terminée pour une partie par le rebord (413) susceptible de retenir l'obturateur (412) qui est moulé sous ce rebord (413) et pour une autre partie par le siège (415) muni du rebord vertical (418) et des deux butées radiales (416a et 416b).

Les figures 5 et 6 montrent la tête de distribution selon l'invention en position de repos, en coupe transversale selon les plans AA et BB définis sur la figure 4. Sur la figure 5 on voit l'élément rigide (51) constitué de la cheminée (511) et de l'organe d'accrochage (512), la pièce élastique (52) repose sur le siège (515); elle est séparée du rebord (518) du siège par un jour (514). La figure 6 se distingue de la figure 5 par la présence d'une butée (616) en regard de la pièce élastique (62).

Le moulage d'une tête de distribution selon l'invention en coupe longitudinale selon le plan AA, conformément à l'art antérieur, (référence de la figure 4) est représenté par la figure 3.

Le moulage d'une tête de distribution selon l'invention en coupe longitudinale selon le plan BB (référence de la figure 4) est représenté par la figure 12. La figure 12 se distingue de la figure 3 par la forme du moule M1 légèrement modifiée au niveau du siège (125) pour former la butée (128).

La figure 7 montre un embout de fermeture selon l'invention en cours de fonctionnement : lorsqu'il y a pression sur le contenu du récipient, le produit P fait soulever l'obturateur élastique (72) qui est retenu par l'organe d'accrochage (73) et par le rebord (74) faisant partie de l'élément rigide (71).

Les figures 8 et 9 montrent l'embout de fermeture selon l'invention après utilisation, en coupe transversale selon les plans AA et BB définis sur la figure 4. Sur la figure 8 on voit la pièce élastique (82) retenue par la butée (83). Sur la figure 9 on voit la pièce élastique (92), ne reposant pas sur le siège (95) du fait de la retenue par la butée (voir figure 8). On observe l'existence d'une ouverture O permettant de laisser passer l'air.

## Revendications

1. Tête de distribution (102) comprenant au moins un canal de distribution (412, 103) d'un produit à distribuer et un système de fermeture autorisant la reprise d'air pour fermer la partie terminale, s'ouvrant sur l'extérieur, du canal de distribution, ledit système de fermeture étant formé par un obturateur (52, 82, 92, 105A) constitué par une lèvre élastique qui fait partie d'une pièce en matériau élastiquement déformable et par au moins un siège (415, 515, 95, 115) faisant partie d'un élément en matériau rigide (41, 51, 71), la pièce en matériau déformable étant au moins partiellement solidaire de l'élément en matériau rigide (417, 512, 73, 117), l'obturateur étant en contact avec son siège associé lorsqu'il n'y a pas de distribution, s'écartant dudit siège par déformation élastique sous la poussée du produit à distribuer, revenant par élasticité lorsque cesse la distribution dans une position qui permet la reprise d'air, caractérisée en ce que le siège est muni d'au moins une butée (416a, 416b, 83) agencée de sorte que, lorsque cesse la distribution, ladite butée empêche la pièce élastique de recouvrir de façon parfaitement étanche la partie terminale du canal de distribution.

2. Tête de distribution selon la revendication 1, caractérisée par le fait que la butée (416a, 416b, 83) est placée sensiblement à la périphérie de l'obturateur (412, 105A).

3. Tête de distribution selon la revendication 1 ou la revendication 2, caractérisée par le fait que le siège (515) comprend un rebord (518) et que la butée (616) est d'une hauteur inférieure ou égale au rebord du siège.

4. Tête de distribution selon l'une quelconque des revendications 1 à 3, caractérisée par le fait que le siège (515) est muni d'un rebord (518) et que la butée (616) est placée sur ce rebord, à l'intérieur du canal défini par ce rebord.

5. Tête de distribution selon l'une quelconque des revendications 1 à 4, caractérisée par le fait que la butée (416a, 416b) est radiale.

6. Tête de distribution selon l'une quelconque des revendications 1 à 5, caractérisée par le fait que le siège (415) comprend au moins deux butées (416a, 416b).

7. Tête de distribution selon la revendication 6, caractérisée par le fait que les butées (416a, 416b) sont régulièrement espacées sur le pourtour du siège (415).

8. Tête de distribution selon l'une quelconque des revendications 1 à 7, caractérisée par le fait qu'elle comprend un couvercle (150) muni d'une pièce rigide (152) qui vient appuyer sur l'obturateur (105A).

9. Tête de distribution selon la revendication 8, caractérisée par le fait que la pièce rigide (152) est placée en regard de la ou des butées.

10. Tête de distribution selon selon l'une quelconque des revendications 1 à 9, caractérisée par le fait que la pièce rigide (152) du couvercle (150) qui vient appuyer sur l'obturateur est continue.

11. Tête de distribution selon l'une quelconque des revendications 1 à 10, caractérisée par le fait que la pièce rigide (152) qui vient appuyer sur l'obturateur occupe toute la périphérie du couvercle (150) qui est en regard du siège.

12. Tête de distribution selon l'une quelconque des revendications 1 à 11, caractérisée par le fait que la pièce rigide (152) qui vient appuyer sur l'obturateur (105A) est d'une hauteur légèrement supérieure à la distance entre le fond du couvercle (150) fermé sur lequel est fixée cette pièce et la surface de l'obturateur.

13. Tête de distribution selon l'une quelconque des revendications 1 à 12, caractérisée par le fait que l'élément rigide (152) est cylindrique à section circulaire.

14. Tête de distribution selon la revendication 11, caractérisée par le fait que la pièce rigide (152) qui vient appuyer sur l'obturateur (105A) est un fragment de bourrelet annulaire.

15. Tête de distribution selon l'une des revendications 1 à 14, caractérisée par le fait que le couvercle (150) est muni d'une jupe de guidage et d'étanchéité (154) et l'élément en matériau rigide est muni d'une cheminée (116) définissant le canal de distribution (103) et se terminant par un sytème de fermeture selon l'invention, ladite jupe étant apte à s'encliqueter, en position rabattue du couvercle, autour de la cheminée.

16. Tête de distribution selon l'une des revendications 1 à 15, caractérisée par le fait que la pièce en matériau déformable (32) est partiellement surmoulée autour de l'élément en matériau rigide (21).

17. Tête de distribution selon l'une des revendications 1 à 16, caractérisée par le fait que l'élément en matériau rigide comprend un organe d'accrochage (417, 517) surmoulé par la pièce élastique (405, 505).

18. Tête de distribution selon l'une des revendications 1 à 17, caractérisée par le fait que l'organe d'accrochage (417, 517) est formé par une barre traversant le canal de distribution.

19. Tête de distribution selon l'une des revendications 1 à 18, caractérisée par le fait que l'organe d'accrochage (417, 517) est noyé dans la pièce en matériau déformable (412).

20. Tête de distribution selon l'une des revendications 1 à 19, caractérisée par le fait que le matériau déformable (S) a une dureté comprise dans la gamme allant de 40 Shore A à 50 Shore D.

21. Tête de distribution selon l'une des revendications 1 à 20, caractérisée par le fait que le matériau déformable (S) à une dureté allant de 50 Shore A à 90 Shore A.

22. Tête de distribution selon l'une des revendications 1 à 21, caractérisée par le fait que la pièce (5, 105, 405, 505) en matériau déformable est moulée en un matériau (R) choisi parmi les polyéthylènes de basse densité, l'éthylène vinyl acétate, le polychlorure de vinyle, les terpolymères de bloc de polypropylène avec des motifs styrène/éthylène - butène/styrène, et les polyuréthanes thermoplastiques.

23. Tête de distribution selon l'une des revendications 1 à 22, caractérisée par le fait que l'élément en matériau rigide (10, 410, 510) est moulé en un matériau (R) choisi parmi les polyéthylènes de haute densité et les polypropylènes.

24. Ensemble de distribution comprenant un récipient, susceptible de contenir un produit à distribuer, et une tête de distribution, caractérisé en ce que la tête de distribution est conforme à l'une quelconque des revendications 1 à 23.

25. Ensemble de distribution selon la revendication 24, caractérisé en ce que le récipient est un récipient compressible manuellement.

## Claims

1. Dispensing head (102) comprising at least one duct (412, 103) for dispensing a product to be dispensed and a closure system allowing air to be taken in to close the end part, opening to the outside, of the dispensing duct, the said closure system being formed by a stopper (52, 82, 92, 105A) consisting of an elastic lip which forms part of a component made of an elastically deformable material, and of at least one seat (415, 515, 95, 115) forming part of an element (41, 51, 71) made of a rigid material, the component made of deformable material being at least partially secured to the element (417, 512, 73, 117) made of rigid material, the stopper being in contact with its associated seat when there is no dispensing, moving away from the said seat by elastic deformation under the thrust of the product to be dispensed, returning by elasticity, when dispensing stops, to a position which allows air to be taken in; characterized in that the seat has at least one stop (416a, 416b, 83) arranged so that, when dispensing stops, the said stop prevents the elastic component from covering the end part of the dispensing duct in a perfectly sealed way.

2. Dispensing head according to Claim 1, characterized in that the stop (416a, 416b, 83) is placed more or less at the periphery of the stopper (412, 105A).

3. Dispensing head according to Claim 1 or Claim 2, characterized in that the seat (515) has a rim (518) and that the stop (616) is below or at the height of the rim of the seat.

4. Dispensing head according to any one of Claims 1 to 3, characterized in that the seat (515) is equipped with a rim (518) and in that the stop (616) is placed on this rim inside the duct defined by this rim.

5. Dispensing head according to any one of Claims 1 to 4, characterized in that the stop (416a, 416b) is radial.

6. Dispensing head according to any one of Claims 1 to 5, characterized in that the seat (415) comprises at least two stops (416a, 416b).

7. Dispensing head according to Claim 6, characterized in that the stops (416a, 416b) are uniformly spaced around the periphery of the seat (415).

8. Dispensing head according to any one of Claims 1 to 7, characterized in that it comprises a lid (150) equipped with a rigid component (152) which presses on the stopper (105A).

9. Dispensing head according to Claim 8, characterized in that the rigid component (152) is placed facing the stop or stops.

10. Dispensing head according to any one of Claims 1 to 9, characterized in that the rigid component (152) of the lid (150) which presses on the stopper is continuous.

11. Dispensing head according to any one of Claims 1 to 10, characterized in that the rigid component (152) which presses on the stopper occupies the entire periphery of the lid (150) which faces the seat.

12. Dispensing head according to any one of Claims 1 to 11, characterized in that the rigid component (152) which presses on the stopper (105A) is of a height that slightly exceeds the distance between the end wall of the closed lid (150), to which wall this component is attached, and the surface of the stopper.

13. Dispensing head according to any one of Claims 1 to 12, characterized in that the rigid element (152) is cylindrical with a circular section.

14. Dispensing head according to Claim 11, characterized in that the rigid component (152) which presses on the stopper (105A) is a fragment of annular rib.

15. Dispensing head according to one of Claims 1 to 14, characterized in that the lid (150) is equipped with a guiding and sealing skirt (154) and the element made of rigid material is equipped with a hollow shaft (116) defining the dispensing duct (103) and terminating in a closure system according to the invention, it being possible for the said skirt to snap around the hollow shaft when the lid is in the folded-down position.

16. Dispensing head according to one of Claims 1 to 15, characterized in that the component (32) made of deformable material is partially overmoulded around the element (21) made of rigid material.

17. Dispensing head according to one of Claims 1 to 16, characterized in that the element made of rigid material comprises a catching member (417, 517) over-moulded by the elastic component (405, 505).

18. Dispensing head according to one of Claims 1 to 17, characterized in that the catching member (417, 517) is formed by a bar passing through the dispensing duct.

19. Dispensing head according to one of Claims 1 to 18, characterized in that the catching member (417, 517) is embedded within the component (412) made of deformable material.

20. Dispensing head according to one of Claims 1 to 19, characterized in that the deformable material (S) has a hardness in the range from 40 Shore A to 50 Shore D.

21. Dispensing head according to one of Claims 1 to 20, characterized in that the deformable material (S) has a hardness of from 50 Shore A to 90 Shore A.

22. Dispensing head according to one of Claims 1 to 21, characterized in that the component (5, 105, 405, 505) made of deformable material is moulded from a material (R) chosen from low-density polyethylenes, ethylene vinyl acetate, polyvinyl chloride, block terpolymers of polypropylene with styrene/ethylene - butene/styrene units, and thermoplastic polyurethanes.

23. Dispensing head according to one of Claims 1 to 22, characterized in that the element (10, 410, 510) made of rigid material is moulded from a material (R) chosen from high-density polyethylenes, and polypropylenes.

24. Dispensing unit comprising a container capable of containing a product to be dispensed, and a dispensing head, characterized in that the dispensing head is in accordance with any one of Claims 1 to 23.

25. Dispensing unit according to Claim 24, characterized in that the container is a manually compressible container.

## Patentansprüche

1. Spenderkopf (102), der mindestens einen Spenderkanal (412, 103) eines zu verteilenden Produktes sowie ein Verschlußsystem zum Verschließen des sich nach außen öffnenden Endteils des Spenderkanals aufweist, das ein Belüften gestattet, wobei dieses Verschlußsystem durch einen Verschluß (52, 82, 92, 105A) ausgebildet wird, der sich aus einer elastischen Lippe, die zu einem Teil aus elastisch verformbarem Material gehört, und aus mindestens einem Sitz (415, 515, 95, 115), der zu einem Element aus starrem Material (41, 51, 71) gehört, zusammensetzt, wobei das Teil aus verformbarem Material zumindest teilweise mit dem Element aus starrem Material (417, 512, 73, 73, 117) fest verbunden ist und wobei der Verschluß mit seinem zugehörigen Sitz in Kontakt ist, wenn keine Ausgabe stattfindet, sich unter dem Druck des zu verteilenden Produktes durch elastische Verformung von diesem Sitz entfernt und, wenn die Ausgabe aufhört, durch Elastizität in eine Position zurückkehrt, die das Belüften gestattet, dadurch gekennzeichnet, daß der Sitz mit mindestens einem Anschlag (416a, 416b, 83) versehen ist, der derart angeordnet ist, daß er, wenn die Ausgabe aufhört, das elastische Teil daran hindert, den Endteil des Spenderkanals auf völlig dichte Weise zu bedecken.

2. Spenderkopf nach Anspruch 1, dadurch gekennzeichnet, daß der Anschlag (416a, 416b, 83) im wesentlichen am Rand des Verschlusses (412, 105A) angeordnet ist.

3. Spenderkopf nach Anspruch 1 oder Anspruch 2, dadurch gekennzeichnet, daß der Sitz (515) eine Schulter (518) aufweist und daß der Anschlag (616) von geringerer oder gleicher Höhe wie die Schulter des Sitzes ist.

4. Spenderkopf nach irgendeinem der Ansprüche 1 bis 3, dadurch gekennzeichnet, daß der Sitz (515) mit einer Schulter (518) versehen ist und daß der Anschlag (616) an dieser Schulter, innerhalb des durch diese Schulter festgelegten Kanals, angeordnet ist.

5. Spenderkopf nach irgendeinem der Ansprüche 1 bis 4, dadurch gekennzeichnet, daß der Anschlag (416a, 416b) radial ist.

6. Spenderkopf nach irgendeinem der Ansprüche 1 bis 5, dadurch gekennzeichnet, daß der Sitz (415) mindestens zwei Anschläge (416a, 416b) aufweist.

7. Spenderkopf nach Anspruch 6, dadurch gekennzeichnet, daß die Anschläge (416a, 416b) am Umgang des Sitzes (415) gleichmäßig beabstandet sind.

8. Spenderkopf nach irgendeinem der Ansprüche 1 bis 7, dadurch gekennzeichnet, daß er einen Deckel (150) aufweist, der mit einem starren Teil (152) versehen ist, das auf den Verschluß (105A) zu drücken kommt.

9. Spenderkopf nach Anspruch 8, dadurch gekennzeichnet, daß das starre Teil (152) dem Anschlag oder den Anschlägen zugewandt angeordnet ist.

10. Spenderkopf nach irgendeinem der Ansprüche 1 bis 9, dadurch gekennzeichnet, daß das starre Teil (152) des Deckels (150), das auf den Verschluß zu drücken kommt, durchgehend ist.

11. Spenderkopf nach irgendeinem der Ansprüche 1 bis 10, dadurch gekennzeichnet, daß das starre Teil (152), das auf den Verschluß zu drücken kommt, den gesamten, dem Sitz zugewandten Rand des Deckels (150) besetzt.

12. Spenderkopf nach irgendeinem der Ansprüche 1 bis 11, dadurch gekennzeichnet, daß das starre Teil (152), das auf den Verschluß (105A) zu drücken kommt, von einer etwas größeren Höhe als der Abstand zwischen dem Boden des geschlossenen Deckels (150), an dem dieses Teil befestigt ist, und der Oberfläche des Verschlusses ist.

13. Spenderkopf nach irgendeinem der Ansprüche 1 bis 12, dadurch gekennzeichnet, daß das starre Element (152) zylindrisch mit kreisförmigem Querschnitt ist.

14. Spenderkopf nach Anspruch 11, dadurch gekennzeichnet, daß das starre Teil (152), das auf den Verschluß (105A) zu drücken kommt, ein Teil einer ringförmigen Verdickung ist.

15. Spenderkopf nach einem der Ansprüche 1 bis 14, dadurch gekennzeichnet, daß der Deckel (150) mit einer Schürze zur Führung und zur Dichtung (154) versehen ist und das Element aus starrem Material mit einem Rohransatz (116) versehen ist, der den Spenderkanal (103) festlegt und mit einem erfindungsgemäßen Verschlußsystem endet, wobei die Schürze geeignet ist, in abgesenkter Position des Deckels um den Rohransatz herum einzurasten.

16. Spenderkopf nach einem der Ansprüche 1 bis 15, dadurch gekennzeichnet, daß das Teil aus verformbarem Material (32) teilweise um das Element aus starrem Material (21) gespritzt wird.

17. Spenderkopf nach einem der Ansprüche 1 bis 16, dadurch gekennzeichnet, daß das Element aus starrem Material ein Befestigungsorgan (417, 517) umfaßt, das von dem elastischen Teil (405, 505) überspritzt wird.

18. Spenderkopf nach einem der Ansprüche 1 bis 17, dadurch gekennzeichnet, daß das Befestigungsorgan (417, 517) durch einen Stab ausgebildet ist, der den Spenderkanal durchquert.

19. Spenderkopf nach einem der Ansprüche 1 bis 18, dadurch gekennzeichnet, daß das Befestigungsorgan (417, 517) in dem Teil aus verformbarem Material (412) eingebettet ist.

20. Spenderkopf nach einem der Ansprüche 1 bis 19, dadurch gekennzeichnet, daß das verformbare Material (S) eine Härte hat, die innerhalb der Spanne von 40 Shorehärte A bis 50 Shorehärte D liegt.

21. Spenderkopf nach einem der Ansprüche 1 bis 20, dadurch gekennzeichnet, daß das verformbare Material (S) eine Härte zwischen 50 Shorehärte A und 90 Shorehärte A hat.

22. Spenderkopf nach einem der Ansprüche 1 bis 21, dadurch gekennzeichnet, daß das Teil aus verformbarem Material (5, 105, 405, 505) aus einem Material (R) geformt wird, das aus den Polyethylenen niedriger Dichte, Ethylen-Vinylacetat, Polyvinylchlorid, den Polypropylen-Blockterpolymeren mit Styrol/Ethylen- - Buten/Styrol-Einheiten und den thermoplastischen Polyurethanen gewählt ist.

23. Spenderkopf nach einem der Ansprüche 1 bis 22, dadurch gekennzeichnet, daß das Element aus starrem Material (10, 410, 510) aus einem Material (R) geformt wird, das aus den Polyethylenen hoher Dichte und den Polypropylenen gewählt ist.

24. Spendereinheit mit einem Behälter, der ein zu verteilendes Produkt enthalten kann, und einem Spenderkopf, dadurch gekennzeichnet, daß der Spenderkopf mit irgendeinem der Ansprüche 1 bis 23 übereinstimmt.

25. Spendereinheit nach Anspruch 24, dadurch gekennzeichnet, daß der Behälter ein manuell komprimierbarer Behälter ist.
